# EUROPEAN PATENT APPLICATION

(11) **EP 4 838 586 A1**
(43) Date of publication of application: **11.11.2026**
(21) Application number: 25209370.3
(22) Date of filing: 17.10.2025
(51) Int. Cl.: H01M 4/66, H01M 50/586

(54) **SECONDARY BATTERY, PREPARATION METHOD THEREFOR, ENERGY STORAGE SYSTEM, AND ELECTRICAL DEVICE**

(30) Priority: 06.05.2025 CN 202510579005
(71) Applicant: Zhejiang Jinko Energy Storage Co., Ltd., Jiaxing, Zhejiang (CN)
(72) Inventor: SHI, Yutao, Haining, Zhejiang (CN); MA, Yujun, Haining, Zhejiang (CN); LIU, Yang, Haining, Zhejiang (CN)
(74) Representative: Balder IP Law, S.L.

(57) **Abstract**

A secondary battery includes: a positive electrode plate including a positive electrode current collector (100) with a main body region (102) and an edge region (101), an active material layer (200) arranged on one surface of the main body region, a first insulating layer (300) arranged on one surface of the edge region, and a second insulating layer (400) arranged on one surface of the first insulating layer. In a predetermined direction, a dimension of the first insulating layer is greater than a dimension of the second insulating layer. Provision of multiple layers, first and second insulating layers, having different sizes can effectively improve the safety performance of the battery cell assembly in the secondary battery, as well as the insulation and flexibility of the positive electrode plate in the battery cell assembly.

## Description

### TECHNICAL FIELD

The present disclosure relates to the field of secondary batteries, in particular to a secondary battery, a preparation method therefor, an energy storage system, and an electrical device.

### BACKGROUND

With the development of electronic and intelligent devices, the demand for secondary energy storage batteries is becoming increasingly urgent. The performance of secondary batteries mainly depends on electrode plates, electrolytes, separators, and other battery materials, among which the electrode plates are particularly important.

In related technologies, a single-layer insulating layer is typically disposed in a root area of the positive electrode plate near the electrode tab to ensure insulation isolation between the positive and negative electrode plates, thereby avoiding direct conduction between the positive and negative electrode plates and short circuits. The insulating layer also needs a certain degree of flexibility to bend along with the process of bending the electrode tabs, so as to avoid safety issues caused by insulation failure due to insulating layer damage.

Therefore, how to design a secondary battery that has improved safety performance while ensuring excellent flexibility and insulation performance in the root area of the positive electrode tab inside the secondary battery remains a key challenge for those skilled in the art.

### SUMMARY

Embodiments of the present disclosure provide a secondary battery, a preparation method therefor, an energy storage system, and an electrical device, which at least help address the issue of insulation failure caused by damage to the insulating layer in the positive electrode plate of the secondary battery during tab bending.

In one aspect of the present disclosure, some embodiments of the present disclosure provide a secondary battery, including a housing with an accommodating cavity; and a battery cell assembly housed in the accommodating cavity. The battery cell assembly includes a positive electrode plate, a separator, and a negative electrode plate. The positive electrode plate includes: a positive electrode current collector having a main body region and an edge region located on one side of the main body region; an active material layer, disposed on at least one surface of the main body region; a first insulating layer over the edge region, where the first insulating layer and the active material layer are disposed on a same side of the positive electrode current collector; and a second insulating layer, disposed on a surface of the first insulating layer facing away from the edge region. In the direction from the main body region to the edge region, a dimension of the first insulating layer is greater than a dimension of the second insulating layer.

In some embodiments, in the direction from the main body region to the edge region, the positive electrode current collector has a first end and a second end opposite to the first end, and the edge region is disposed on one side of the main body region close to the second end. In the direction from the main body region to the edge region, a distance between an edge of the first insulating layer close to the second end and the second end is smaller than a distance between an edge of the second insulating layer close to the second end and the second end.

In some embodiments, the first insulating layer and the second insulating layer abut against the active material layer.

In some embodiments, in the direction from the main body region to the edge region, a width L1 of the first insulating layer, a width L2 of the second insulating layer, and a width L3 of the edge region satisfy 0.12 × L1 ≤ L2<L1, 0.2 × L3 ≤ LI ≤ L3, 8mm ≤ L1 ≤ 40 mm, 3 mm ≤ L2 ≤ 8 mm, 8 mm ≤ L3 ≤ 40 mm.

In some embodiments, in a thickness direction of the positive electrode current collector, a thickness H1 of the first insulating layer, and a thickness H2 of the second insulating layer satisfy H2>H1, and 0.01 × H2 ≤ H1 ≤ 0.13 × H2.

In some embodiments, a thickness H3 of the active material layer satisfies 0.2 × H3 ≤ H2 ≤ 0.5 ×H3, 0.8 µm≤ H1 ≤2 µm, 15 µm ≤ H2 ≤ 60 µm, and 70 µm≤ H3 ≤ 90 µm.

In some embodiments, the secondary battery further includes a carbon layer sandwiched between the positive electrode current collector and the active material layer, where the carbon layer and the active material layer extend from the first end along the direction from the main body region to the edge region. In the direction from the main body region to the edge region, a width of the active material layer is equal to a width of the carbon layer; and the carbon layer abuts against the first insulating layer.

In some embodiments, the first insulating layer completely covers the edge region.

In some embodiments, the first insulating layer includes a covered portion and an exposed portion; the covered portion correspond to the second insulating layer; a window is provided on the exposed portion, and part of the positive electrode current collector is exposed from the window.

In some embodiments, a material of the first insulating layer includes at least one of ceramic, polyvinylidene fluoride, and polyimide; and a material of the second insulating layer includes ceramic and polyvinylidene fluoride.

In some embodiments, in a case that the material of the first insulating layer includes ceramic and polyvinylidene fluoride, a weight w1 of ceramic in the first insulating layer, and a weight w2 of polyvinylidene fluoride in the first insulating layer satisfy 1/9 ≤ w1/w2 ≤ 3/7. In a case where the material of the first insulating layer includes ceramic and polyimide, the weight w1 of ceramic in the first insulating layer, and a weight w3 of polyimide in the first insulating layer satisfy 0 < w1/w3 ≤ 3/7. In a case where the material of the first insulating layer includes polyimide only, a weight proportion of polyimide in the first insulating layer is 100%. In a case that the material of the second insulating layer includes ceramic and polyvinylidene fluoride, a weight w4 of ceramic in the second insulating layer, and a weight w5 of polyvinylidene fluoride in the second insulating layer satisfy 4 ≤ w4/w5 ≤ 9.

In another aspect of the present disclosure, some embodiments of the present disclosure further provide a preparation method for a secondary battery, including: providing a positive electrode current collector having a main body region and an edge region located on one side of the main body region; forming a first insulating layer over the edge region of the positive electrode current collector; forming an active material layer on the main body region, where the active material layer and the first insulating layer are formed on a same side of the positive electrode current collector; forming a second insulating layer on a surface of the first insulating layer facing away from the edge region to obtain a positive electrode plate; where in the direction from the main body region to the edge region, a dimension of the first insulating layer is greater than a dimension of the second insulating layer; providing a separator and a negative electrode plate, assembling the positive electrode plate with the separator and the negative electrode plate to obtain a battery cell assembly; and providing a housing, assembling and connecting the battery cell assembly with the housing to obtain a secondary battery.

In another aspect of the present disclosure, some embodiments of the present disclosure further provide an energy storage system including at least one secondary battery, where the at least one secondary battery includes the secondary battery as described previously or the secondary battery obtained using the preparation method as described previously.

In another aspect of the present disclosure, some embodiments of the present disclosure further provide an electrical device including at least one secondary battery, where the at least one secondary battery includes the secondary battery as described previously or the secondary battery obtained using the preparation method as described previously.

### BRIEF DESCRIPTION OF THE DRAWINGS

One or more embodiments are illustrated through the figures in the corresponding drawings. These exemplary illustrations do not constitute limitations on the embodiments unless otherwise stated. The figures in the accompanying drawings do not constitute a scale limitation. In order to illustrate the technical solutions in the embodiments of the present disclosure or in the conventional technology more clearly, the drawings used in the description of the embodiments are briefly described below. It is apparent that the drawings in the following description show only some embodiments of the present disclosure, and other drawings may be obtained by those of ordinary skill in the art based on these drawings without any creative efforts.
FIG. 1 is a schematic cross-sectional view of a positive electrode plate in a secondary battery according to an embodiment of the present disclosure;
FIG. 2 is a top view of the positive electrode plate in the secondary battery according to an embodiment of the present disclosure;
FIG. 3 is an enlarged schematic diagram of the positive electrode plate in the secondary battery according to an embodiment of the present disclosure;
FIG. 4 is a schematic cross-sectional view of a positive electrode plate in a secondary battery according to another embodiment of the present disclosure;
FIG. 5 is an enlarged schematic diagram of the positive electrode plate in the secondary battery according to another embodiment of the present disclosure;
FIG. 6 is an enlarged schematic diagram of the positive electrode plate in the secondary battery according to another embodiment of the present disclosure;
FIG. 7 is a schematic cross-sectional view of a positive electrode plate in a secondary battery according to another embodiment of the present disclosure;
FIG. 8 is a top view of a positive electrode plate in a secondary battery according to another embodiment of the present disclosure; and
FIG. 9 is a flow chart of a preparation method for a secondary battery according to an embodiment of the present disclosure.

Reference numerals in the accompanying drawings are listed as follows: 100 positive electrode current collector; 101 edge region; 1011 welding portion; 102 main body region; 1001 first end; 1002 second end; 200 active material layer; 300 first insulating layer; 301 covered portion; 302 exposed portion; 310 window; 400 second insulating layer; 500 carbon layer.

### DETAILED DESCRIPTION OF THE EMBODIMENTS

According to the background technology, a single-layer insulating layer is typically disposed in a root area of the positive electrode plate near the electrode tab to prevent the positive electrode from conducting with the negative electrode and causing a short circuit. To enhance the insulation performance at the root area of the positive electrode tab, conventional methods typically require increasing the area or thickness of the insulating layer. Conversely, to improve flexibility at the root area of the positive electrode tab, conventional methods typically require reducing the thickness or width of the insulating layer. These two design requirements conflict with each other, and existing insulating layers in prior art fail to simultaneously satisfy both requirements.

Embodiments of the present disclosure provide a secondary battery. The positive electrode plate in the secondary battery has a first insulating layer and a second insulating layer, two insulating layers in total. A width dimension of the first insulating layer close to the positive electrode current collector is greater than a width dimension of the second insulating layer distant from the positive electrode current collector, so that the wider first insulating layer can cover a larger area of the positive electrode current collector, providing better insulation performance for the positive electrode plate according to the present disclosure; the narrower second insulating layer is less affected during positive electrode tab bending, and there is no safety issue of insulation failure caused by bending-induced damage. In summary, the first and second insulating layers having different sizes according to the present disclosure can effectively address the issue of conflicting design requirements for high insulation performance and high flexibility, and can improve the flexibility and insulation performance at the same time, further improving the safety performance of secondary batteries.

In the description of the embodiments of the present disclosure, technical terms such as "first", "second", etc., are merely used for distinguishing different objects and should not be construed as indicating or implying relative importance or as implicitly specifying the number, specific order, or priority of the technical features referred to. In the description of the embodiments of the present disclosure, the term "plurality/plural/multiple" refers to two or more, unless otherwise explicitly specified. Similarly, "multiple groups" or "plurality of groups" refers to two or more groups (including two groups), and "multiple pieces" or "plurality of pieces" refers to two or more pieces (including two pieces).

The mention of "embodiment" in this paper means that the specific features, structures, or characteristics described in conjunction with the embodiments may be included in at least one embodiment of the present disclosure. The appearance of this phrase at various locations in the specification does not necessarily refer to the same embodiment, nor is it an independent or alternative embodiment that is exclusive with other embodiments. Those skilled in the art can understand explicitly and implicitly that the embodiments described in this paper can be combined with other embodiments.

In the description of the embodiments of the present disclosure, the term "and/or" merely describes the associative relationship between associated objects, indicating that there can be three types of relationships. For example, A and/or B can represent three possible situations: sole existence of A, existence of both A and B, and sole existence of B. Additionally, the character "/" in this paper generally indicates that the associated objects with this character are in an "or" relationship.

In the description of the embodiments of the present disclosure, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicate the orientation or positional relationship based on the orientation or positional relationship shown in the accompanying drawings. This is solely for the purpose of facilitating the description of the embodiments of the present disclosure and simplifying the description, and in no way indicate or imply that the devices or elements referred to must have a specific orientation, be constructed or operated in a specific orientation. Therefore, these terms should not be construed as a limitation on the embodiments of the present disclosure. For example, if the device or element in the drawings is inverted, the element described as being "below" or "under" or "at the bottom of" other components or features herein will be oriented as being "above" or "at the top" of the other elements or features correspondingly. Therefore, the term "below" may have different explanation depending on the context in which the term is used, encompassing both the "above" and "below" orientations, which will be evident to those skilled in the art. The material may be oriented in other ways (e.g. rotated 90 degrees, inverted, flipped), and the spatial relative terms used in this paper can be explained accordingly.

In the description of the embodiments of the present disclosure, unless otherwise explicitly specified and defined, the technical terms such as "installation", "connection", "fixation", etc. should be understood in a broad sense. For example, "connection" may refer to fixed connection, detachable connection, or integral connection; mechanical connection or electrical connection; direct connection, or indirect connection through an intermediary. It may further refer to the internal connectivity between two components or the interaction between two components. For those of ordinary skill in the art, the specific meanings of the above terms in embodiments of the present disclosure should be understood according to the specific circumstances.

In the drawings corresponding to the embodiments of the present disclosure, the thickness and area of the layers have been exaggerated for better understanding and ease of description. In addition, when it recites that a component is "roughly" formed on another component, it means that this component is not formed on the entire surface (or front surface) of the another component, nor is it formed on a portion of the edge of the entire surface.

In the description of the embodiments of the present disclosure, when it recites that one component "includes" another component, it does not exclude other components and other components may also be further included unless otherwise stated. The expression that a second component is formed or disposed above or on a first component, or a second component is formed or disposed on a surface of a first component, or a second component is formed or disposed on one side of the first component, may encompass embodiments in which the first and second components are in direct contact, and may also encompass embodiments in which additional components may be disposed between the first and second components and the first and second components are therefore in indirect contact. For simplicity and clarity, various components may be drawn at any scale. In the accompanying drawings, some layers/components may be omitted for simplicity. Unless otherwise specified, the description that a second component is formed or disposed on a surface of a first component implies that the first component is in direct contact with the second component. The aforementioned "component" may refer to layer, film, region, part, or structure.

The terms used in the description of various embodiments mentioned in this paper are solely for the purpose of describing specific embodiments and are not intended to be restrictive. As used in the description of the various embodiments and the appended claims, "component" is also intended to cover the plural form, unless the context clearly indicates otherwise. Among them, components include layers, films, regions, or plates.

The following provides a detailed description of the various embodiments of the present disclosure in conjunction with the accompanying drawings. However, those of ordinary skill in the art may understand that in various embodiments of the present disclosure, many technical details have been presented to facilitate a better understanding of the present disclosure by the reader. However, even without these technical details and the various variations and modifications based on the following embodiments, the technical solution claimed in the present disclosure can still be achieved.

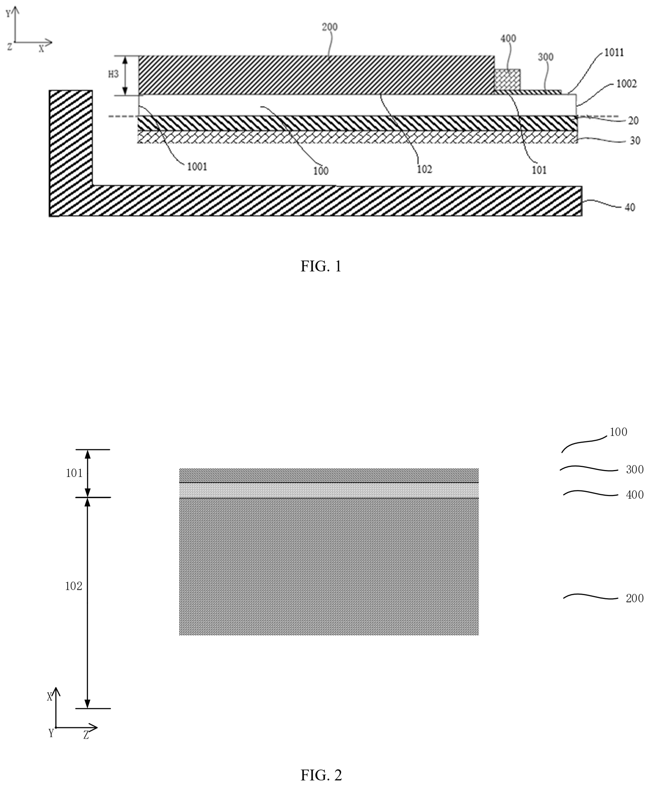

Referring to FIG. 1, FIG. 1 is a schematic cross-sectional view of a positive electrode plate in a secondary battery according to an embodiment of the present disclosure. The secondary battery includes a housing with an accommodating cavity.

The secondary battery further includes a battery cell assembly housed in the accommodating cavity.

The battery cell assembly includes a positive electrode plate, a separator 20, and a negative electrode plate 30.

The positive electrode plate includes: a positive electrode current collector 100, an active material layer 200, a first insulating layer 300, and a second insulating layer 400.

The positive electrode current collector 100 has a main body region 102 and an edge region 101 located on one side of the main body region 102.

The active material layer 200 is disposed on at least one surface of the main body region 102.

The first insulating layer 300 is disposed over the edge region 101. The first insulating layer 300 and the active material layer 200 are disposed on a same side of the positive electrode current collector 100.

The second insulating layer 400 is disposed on a surface of the first insulating layer 300 facing away from the edge region 101.

In the predetermined direction X, a dimension of the first insulating layer 300 is greater than a dimension of the second insulating layer 400.

The positive electrode plate according to the present disclosure has a first insulating layer 300 and a second insulating layer 400, two insulating layers in total. And, in the direction X from the main body region to the edge region, the dimension of the first insulating layer 300 is greater than that of the second insulating layer 400. Compared to related technologies, the first insulating layer 300 according to the present disclosure can cover a larger area of the edge region 101, providing better insulation performance for the positive electrode plate according to the present disclosure. The insulating layer structure according to the present disclosure is a multi-layer structure. Compared to the single-layer insulating layer in related technologies, the first insulating layer 300 according to the present disclosure has a smaller size in the thickness direction Y, making it more flexible, so that the first insulating layer 300 can be bent without damage during the process of bending the positive electrode tab, avoiding insulation failure caused by bending-induced damage. Compared to related technologies, in the process of bending the positive electrode tab, the second insulating layer 400 is less affected due to its smaller size in the direction X from the main body region to the edge region, and there is no safety issue of insulation failure caused by bending-induced damage. According to the present disclosure, the first insulating layer 300 and the second insulating layer 400 have different sizes, which can effectively address the issue of conflicting design requirements for high insulation performance and high flexibility, and can improve the flexibility and insulation performance at the same time, further improving the safety performance of secondary batteries.

The following provides a detailed description of various embodiments of the present disclosure in conjunction with the accompanying drawings.

As shown in FIG. 1 to FIG. 3, the secondary battery includes a housing 40 and a battery cell assembly. The interior of the housing has an accommodating cavity, and the battery cell assembly is housed therein. The present disclosure imposes no specific restrictions on the shape of the housing, which may be cylindrical, square, or any other shape.

The secondary battery may be a sodium-ion battery, a lithium-ion battery, or any other type of battery capable of reactivating active materials through recharging after discharge for continued use.

The battery cell assembly is the core component for the secondary battery to achieve charging and discharging functions. The battery cell assembly includes a positive electrode plate, a separator, and a negative electrode plate. The separator separates the positive electrode plate from the negative electrode plate. The battery cell assembly may be of a wound structure, in which the positive electrode plate, the separator, and the negative electrode plate are sequentially layered and wound for two or more turns to form the battery cell assembly. The battery cell assembly may also be of a stacked structure, with multiple positive electrode plates and multiple negative electrode plates alternatingly stacked, and the separator separating adjacent positive and negative electrode plates.

The positive electrode plate is a high-potential electrode plate containing active substances that undergo reduction reactions during discharge. The positive electrode plate has intersecting and mutually perpendicular predetermined direction X, thickness direction Y, and length direction Z, where the direction X is defined as the width direction of the positive electrode plate, that is, from the main body region to the edge region. The positive electrode plate includes: a positive electrode current collector 100, an active material layer 200, and an insulating layer structure.

With reference to FIG. 1 and FIG. 2, FIG. 1 and FIG. 2 respectively show a cross-sectional view and a top view of a positive electrode plate in a secondary battery according to an embodiment of the present disclosure. The positive electrode current collector 100 is of a sheet-like structure extending along the length direction Z. In the direction X , the positive electrode current collector 100 has a first end 1001 and a second end 1002 opposite to the first end. The positive electrode current collector 100 has a main body region 102 and an edge region 101 located on one side of the main body region 102. That is, the main body region 102 is located on the side close to the first end 1001, and the edge region 101 is located on the side close to the second end 1002. The main body region 102 is configured to bear the active material layer, and the edge region 101 is configured not only to bear the insulating layer structure, but also to connect the positive electrode current collector 100 to a current collecting plate or other structures by welding in subsequent processing to form a conductive path.

The active material layer 200 is disposed on two opposite surfaces of the main body region 102, and completely covers the surface of the main body region 102 along the direction X from the first end 1001 to a boundary between the main body region 102 and the edge region 101. The active material layer 200 contains active substances that undergo reduction reactions during discharge.

The insulating layer structure is disposed on two opposite surfaces of the edge region 101, and includes a first insulating layer 300 and a second insulating layer 400 arranged in sequence. The first insulating layer 300 is disposed over the edge region 101. The second insulating layer 400 is disposed on a surface of the first insulating layer 300 facing away from the edge region 101. The first insulating layer 300 is arranged along the direction X to extend from the boundary between the main body region 102 and the edge region 101 towards the second end 1002, and the second insulating layer 400 is arranged along the direction X to extend from an edge of the first insulating layer 300 facing away from the second end 1002 towards the second end 1002. That is, the ends of the first insulating layer 300 and the second insulating layer 400 that face away from the second end 1002 both abut against the active material layer 200.

In the direction X, the dimension of the first insulating layer 300 is greater than that of the second insulating layer 400, and a distance between an edge of the first insulating layer 300 close to the second end 1002 and the second end 1002 is smaller than a distance between an edge of the second insulating layer 400 close to the second end 1002 and the second end 1002. Compared to related technologies, the first insulating layer 300 covers a larger area of the edge region 101 to provide better insulation performance for the insulating structure. The dimension of the second insulating layer 400 in the direction X is relatively small, so that in the process of bending the positive electrode tab, the second insulating layer 400 is less affected, greatly reducing the possibility of bending-induced damage to the second insulating layer 400 and avoiding the safety issue of insulation failure caused by bending-induced damage to the second insulating layer 400.

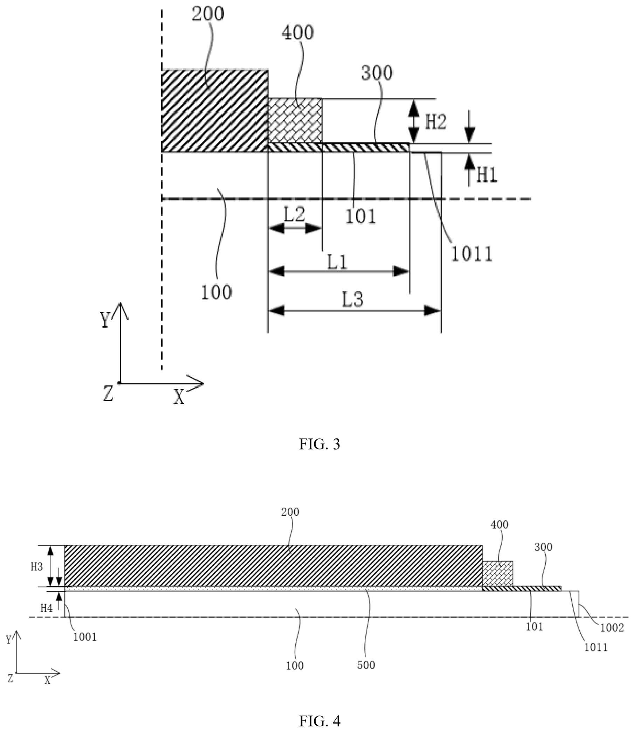

Furthermore, as shown in FIG. 3, FIG. 3 is an enlarged schematic diagram of the positive electrode plate in the secondary battery according to an embodiment of the present disclosure. In the direction X, the width of the first insulating layer 300 (first width L1), and the width of the second insulating layer 400 (second width L2) satisfy 0.12 × L1 ≤ L2<L1. In some embodiments, 0.3 × L1 ≤ L2 ≤ 0.7 × L1. The second width of the second insulating layer 400 needs to be smaller than the first width of the first insulating layer 300, while the second width of the second insulating layer 400 needs to be greater than a specified proportion (e.g., 0.12 in this case) of the first width of the first insulating layer 300. This prevents the second insulating layer 400 from being excessively narrow, which could cause the overall insulation failure of the insulating layer structure.

In some embodiments, the first width L1 of the first insulating layer 300 satisfies 8 mm ≤ L1 ≤ 40 mm. In some embodiments, 15 mm ≤ L1 ≤ 30 mm. The first width L1 of the first insulating layer 300 may be 18 mm, 20 mm, 23 mm, 25 mm, or 28 mm.

In some embodiments, the second width L2 of the second insulating layer 400 satisfies 3 mm ≤ L2 ≤ 8 mm. In some embodiments, 4 mm ≤ L2 ≤ 6 mm. The second width L2 of the second insulating layer 400 may be 4 mm, 4.5 mm, 5 mm, 5.5 mm, or 6 mm.

Furthermore, in the direction X, the width L3 of the edge region 101, and the width L1 of the first insulating layer 300 satisfy 0.2 × L3 ≤ LI ≤ L3. In some embodiments, 0.5 × L3 ≤ L1 ≤ L3. The first width of the first insulating layer 300 needs to be greater than a specified proportion (such as 0.2 in this case) of the third width of the edge region 101. This ensures that the first width of the first insulating layer 300 is not too small to meet the insulation performance requirements of the edge region 101 for the insulating layer structure.

In some embodiments, the third width L3 of the edge region 101 satisfies 8 mm ≤ L3 ≤ 40 mm. In some embodiments, 15 mm ≤ L3 ≤ 30 mm. The third width L3 of the edge region 101 may be 18 mm, 20 mm, 23 mm, 25 mm, or 28 mm.

In the thickness direction Y, the thickness of the second insulating layer 400 is greater than that of the first insulating layer 300. In the thickness direction Y, a thinner first insulating layer 300 provides better flexibility. This prevents the safety issue of insulation failure caused by bending-induced damage of the first insulating layer 300 during the process of bending the positive electrode tab. The second insulating layer 400 has a greater thickness along the thickness direction Y. In some embodiments, the total thickness of the insulating layer structure is equivalent to that of a single-layer insulating layer in prior art, and the dimensional difference between the second insulating layer 400 of the present disclosure and the single-layer insulating layer in related technologies is relatively small, so that the second insulating layer 400 exhibits superior compatibility with laser die-cutting.

Furthermore, in the thickness direction Y, a thickness of the first insulating layer 300 (first thickness H1), and a thickness of the second insulating layer 400 (second thickness H2) satisfy 0.01 × H2 ≤ H1 ≤ 0.13 × H2. In some embodiments, 0.05 × H2 ≤ H1 ≤ 0.1 × H2. The first thickness of the first insulating layer 300 is much smaller than the second thickness of the second insulating layer 400, so that the dimensional difference between the second insulating layer 400 of the present disclosure and the single-layer insulating layer in related technologies is relatively small, and the second insulating layer 400 exhibits superior compatibility with laser die-cutting. Further, the first thickness of the first insulating layer 300 is relatively small, providing better flexibility for the first insulating layer 300.

In some embodiments, the first thickness H1 of the first insulating layer 300 satisfies 0.8 µm ≤ H1 ≤ 2 µm. In some embodiments, 1 µm ≤ H1 ≤ 1.8 µm. The first thickness H1 of the first insulating layer 300 may be 1 µm, 1.2 µm, 1.4µm, 1.6 µm or 1.8 µm.

In some embodiments, the second thickness H2 of the second insulating layer 400 satisfies 15 µm ≤ H2 ≤ 60 µm. In some embodiments, 25 µm ≤ H2 ≤ 50 µm. The second thickness H2 of the second insulating layer 400 may be 25 µm, 30 µm, 35 µm, 40 µm or 45 µm.

Furthermore, in the thickness direction Y, a thickness of the active material layer 200 (third thickness H3), and the second thickness H2 of the second insulating layer 400 satisfy 0.2 × H3 ≤ H2 ≤ 0.5 × H3. In some embodiments, 0.3 × H3 ≤ H2 ≤ 0.4 × H3. Since the first thickness of the first insulating layer 300 occupies a minimal proportion in the insulating layer structure, the first insulating layer 300 contributes less to both the insulation effect on the active material layer 200 and the laser die-cutting compatibility, and the second thickness of the second insulating layer 400 which occupies a major proportion needs to be within a specified ratio range (e.g., 0.2 to 0.5 in this case) relative to the third thickness of the active material layer 200. This ensures the insulation effect of the insulating layer structure on the adjacent active material layer 200.

In some embodiments, the third thickness H3 of the active material layer 200 satisfies 70 µm ≤ H3 ≤ 90 µm. In some embodiments, 75 µm ≤ H3 ≤ 85 µm. The third thickness H3 of the active material layer 200 may be 75 µm, 78 µm, 80 µm, 83 µm or 85 µm.

It should be noted that in some embodiments, the active material layer 200 and the insulating layer structure are provided on two opposite surfaces of the positive electrode current collector 100. In some embodiments, the active material layer 200 and the insulating layer structure are only provided on one surface of the positive electrode current collector 100. The present disclosure imposes no specific limitation therefor.

As shown in FIG. 4 to FIG. 6, FIG. 4 to FIG. 6 respectively show a cross-sectional view and enlarged schematic diagrams of a positive electrode plate in a secondary battery according to another embodiment of the present disclosure. In some embodiments, the positive electrode plate further includes a carbon layer 500. The carbon layer 500 is disposed on one surface of the main body region 102, and the active material layer 200 is disposed on one surface of the carbon layer 500 facing away from the main body region 102. In the direction X, the dimension of the carbon layer 500 is equal to that of the active material layer 200. That is, the carbon layer 500 is sandwiched between the active material layer 200 and the positive electrode current collector 100. The carbon layer 500 and the active material layer 200 completely cover the surface of the main body region 102. That is, in the direction X, one end of the combination of the carbon layer 500 and the active material layer 200 adjoins the first end 1001 of the positive electrode current collector 100, and the other end thereof adjoins the boundary between the main body region 102 and the edge region 101. Provision of the carbon layer 500 can reduce the interfacial impedance of the positive electrode current collector 100, thereby reducing the internal resistance of the secondary battery. During charge-discharge cycles of the secondary battery, it can suppress the increase in dynamic internal resistance. The carbon layer 500 can also improve the adhesion between the active material layer 200 and the positive electrode current collector 100, reduce the amount of adhesive used, and thus reduce the manufacturing cost of the secondary battery.

Furthermore, in the thickness direction Y, a thickness of the carbon layer 500 (fourth thickness H4), and the first thickness H1 of the first insulating layer 300 satisfy 0.8 × H4 ≤ H1 ≤ 1.2 × H4. The thickness of the first insulating layer 300 is close to that of the carbon layer 500. The first thickness of the first insulating layer 300 needs to be within a specified ratio range (e.g., 0.8 to 1.2 in this case) relative to the fourth thickness of the carbon layer 500, to ensure the insulation effect of the first insulating layer 300 on the adjacent carbon layer 500. In the preparation method for the secondary battery, the first thickness of the first insulating layer 300 formed first needs to be close to the fourth thickness of the carbon layer 500 formed later, so that the first insulating layer 300 can confine the slurry used to form the carbon layer 500, thereby preventing overflow of the slurry.

As shown in FIG. 4, the first thickness H1 of the first insulating layer 300 and the fourth thickness H4 of the carbon layer 500 satisfy H1=H4. One end of the carbon layer 500 close to the second end 1002 adjoins the first insulating layer 300, and one end of active material layer 200 close to the second end 1002 adjoins the second insulating layer 400.

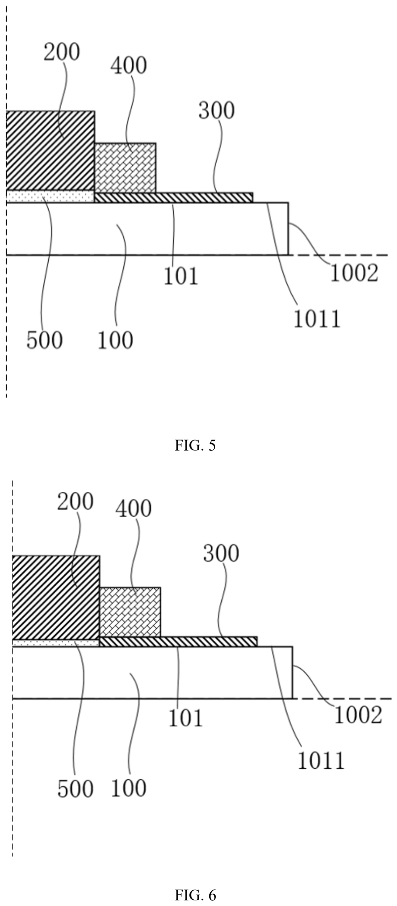

As shown in FIG. 5, the first thickness H1 of the first insulating layer 300 and the fourth thickness H4 of the carbon layer 500 satisfy 0.8×H4 ≤ H1≤ H4. One end of the carbon layer 500 close to the second end 1002 adjoins the first insulating layer 300 and part of the second insulating layer 400, and one end of active material layer 200 close to the second end 1002 adjoins the second insulating layer 400.

As shown in FIG. 6, the first thickness H1 of the first insulating layer 300 and the fourth thickness H4 of the carbon layer 500 satisfy H4 ≤ H1 ≤ 1.2 × H4. One end of the carbon layer 500 close to the second end 1002 adjoins the first insulating layer 300, and one end of active material layer 200 close to the second end 1002 adjoins the second insulating layer 400 and part of the first insulating layer 300.

In some embodiments, the fourth thickness H4 of the carbon layer 500 satisfies 0.6 µm ≤ H4 ≤ 2.5 µm. In some embodiments, 1 µm ≤ H4 ≤ 2 µm. The fourth thickness H4 of the carbon layer 500 may be 1 µm, 1.3 µm, 1.5µm, 1.8 µm or 2 µm.

As shown in FIG. 1, in the direction X, the first width of the first insulating layer 300 is smaller than the third width of the edge region 101, so that part of the edge region 101 is exposed from the first insulating layer 300. That is, part of the edge region 101 close to the second end 1002 is exposed from the first insulating layer 300 to form a welding portion 1011. The welding portion 1011 is used for welding connection between the positive electrode current collector 100 and the current collecting plate or other structures.

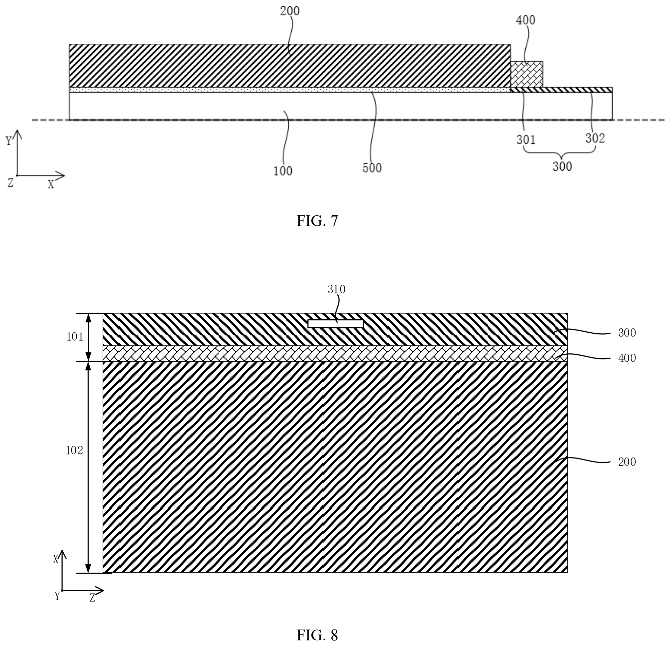

With reference to FIG. 7 and FIG. 8, FIG. 7 and FIG. 8 respectively show a cross-sectional view and a top view of a positive electrode plate in a secondary battery according to another embodiment of the present disclosure. The first insulating layer 300 includes a covered portion 301 and an exposed portion 302. The covered portion 301 is the part of the first insulating layer 300 covered by the second insulating layer 400, and the exposed portion 302 is the part of the first insulating layer 300 exposed from the second insulating layer 400. Since both the first insulating layer 300 and the second insulating layer 400 extend from the boundary between the main body region 102 and the edge region 101 towards the second end 1002, the exposed portion 302 is positioned on the side of the covered portion 301 close to the second end 1002.

In some embodiments, the first insulating layer 300 completely covers the surface of the edge region 101, and further improves its insulation performance, thereby enhancing the safety performance of the secondary battery.

Furthermore, as shown in FIG. 8, the exposed portion 302 of the first insulating layer 300 has a window 310 opening through along the thickness direction Y, so that part of the edge region 101 is exposed from the window 310. The window 310 is used for welding connection between the edge region 101 and the current collecting plate or other structures. The first insulating layer 300 completely covers the surface of the edge region 101, further improving the insulation isolation effect of the first insulating layer 300 on the edge region 101.

It should be noted that before the positive electrode plate of the present disclosure is welded to the current collecting plate or other structures, the first insulating layer 300 completely covers the surface of the edge region 101, the subsequent welding operation damages part of the exposed portion 302 to form the window 310, exposing part of the surface of the edge region 101 and welding it to the current collecting plate to form a current conduction passage.

Furthermore, the fracture toughness of the first insulating layer 300 is greater than that of the second insulating layer 400 to avoid insulation failure caused by excessive bending of the first insulating layer 300 during the process of bending the positive electrode tab.

Furthermore, the material of the first insulating layer 300 includes at least one of ceramic, polyvinylidene fluoride (PVDF), and polyimide (PI). The insulating layer of the positive electrode plate in related technologies is typically made of pure ceramic materials, which have the advantages of high temperature resistance and good insulation performance. However, the insulating layer made of pure ceramic materials has poor flexibility, which may easily suffer from insulation failure due to bending-induced damage. The material of the first insulating layer 300 according to the present disclosure may be a composition of ceramic and polyvinylidene fluoride, or ceramic and polyimide. Both polyvinylidene fluoride and polyimide have excellent properties of high flexibility, high heat resistance, and good film-forming performance. Compared with those in related technologies, the first insulating layer 300 according to the present disclosure has excellent insulation performance, better flexibility, and can be processed into a thinner film, thereby improving the safety performance of secondary batteries.

In some embodiments, in a case that the material of the first insulating layer 300 includes ceramic and polyvinylidene fluoride, a weight of ceramic in the first insulating layer (first weight w1), and a weight of polyvinylidene fluoride in the first insulating layer (second weight w2) satisfy 1/9 ≤ w1/w2 ≤ 3/7. In some embodiments, 1/8 ≤ w1/w2 ≤ 2/7.

In some embodiments, in a case where the material of the first insulating layer 300 includes ceramic and polyimide, the first weight w1 of ceramic in the first insulating layer , and a weight of polyimide in the first insulating layer (third weight w3) satisfy 0 < w1/w3 ≤ 3/7. In some embodiments, 1/7 ≤ w1/w3 ≤ 2/7.

In some embodiments, in a case where the material of the first insulating layer 300 includes polyimide only, the weight proportion of polyimide in the first insulating layer 300 is 100%. That is, there are cases where the material of the first insulating layer 300 is pure polyimide.

In order to better illustrate the beneficial effects of the embodiments of the present disclosure, corresponding embodiments and comparative examples are provided below. The specific materials of the first insulating layer 300 and their corresponding effects are shown in the table below:

**Table 1**

| Samples | Component 1 | Component 2 | Weight ratio of Component 1 and Component 2 | Fracture Toughness (MPa m^{1/2}) |
|---|---|---|---|---|
| Embodiment 1 | Ceramic | Polyvinylidene fluoride | 1:8 | 10.1 |
| Embodiment 2 | Ceramic | Polyvinylidene fluoride | 1: 7 | 10.5 |
| Embodiment 3 | Ceramic | Polyvinylidene fluoride | 2: 7 | 10.4 |
| Embodiment 4 | Ceramic | Polyvinylidene fluoride | 3: 7 | 10.1 |
| Embodiment 5 | Null | Polyimide | 0: 100 | 16.9 |
| Embodiment 6 | Ceramic | Polyimide | 1: 7 | 10.1 |
| Embodiment 7 | Ceramic | Polyimide | 3: 14 | 10.6 |
| Embodiment 8 | Ceramic | Polyimide | 1: 4 | 10.4 |
| Embodiment 9 | Ceramic | Polyimide | 2: 7 | 9.9 |
| Comparative Example 1 | Ceramic | Null | 100: 0 | 4.8 |
| Comparative Example 2 | Ceramic | Polyvinylidene fluoride | 1: 9 | 5.6 |
| Comparative Example 3 | Ceramic | Polyvinylidene fluoride | 4: 7 | 6.4 |
| Comparative Example 4 | Ceramic | Polyimide | 1: 3 | 6.5 |

As shown in Table 1, in the case where the material of the first insulating layer 300 is a composition of ceramic and polyvinylidene fluoride, or a composition of ceramic and polyimide, compared to Comparative Example 1 of the insulating layer with pure ceramic in related technologies, the first insulating layer 300 according to the present disclosure has better fracture toughness. Compared to Comparative Examples 2 and 3 with the same ceramic and polyvinylidene fluoride components, the first insulating layer 300 also made of ceramic and polyvinylidene fluoride within a weight ratio range specified according to the present disclosure has better fracture toughness. Compared to Comparative Example 4 with the same ceramic and polyimide components, the first insulating layer 300 also made of ceramic and polyimide within a weight ratio range specified according to the present disclosure or the first insulating layer 300 made of pure polyimide according to the present disclosure has better fracture toughness. In summary, the first insulating layer 300 using the material composition within the specified weight ratio range according to the present disclosure has better fracture toughness, which prevents the first insulating layer 300 from insulation failure due to bending-induced damage during the bending process.

Furthermore, the material of the second insulating layer 400 includes ceramic and polyvinylidene fluoride. Both polyvinylidene fluoride and polyimide have excellent properties of high flexibility, high heat resistance, excellent mechanical performance and good film-forming performance. Compared with those in related technologies, the second insulating layer 400 according to the present disclosure has excellent insulation performance, better flexibility, and better laser die-cutting compatibility, thereby improving the safety performance of secondary batteries.

In some embodiments, a weight of the ceramic in the second insulating layer 400 (fourth weight w4), and a weight of the polyvinylidene fluoride in the second insulating layer 400 (fifth weight w5) satisfy 4 ≤ w4/w5 ≤ 9. In some embodiments, 5 ≤ w4/w5 ≤ 8.

In order to better illustrate the beneficial effects of the embodiments of the present disclosure, corresponding embodiments and comparative examples are provided below. The specific materials of the second insulating layer 400 and their corresponding effects are shown in the table below:

**Table 2**

| Samples | Component 3 | Component 4 | Weight ratio of Component 3 and Component 4 | Fracture Toughness (MPa m^{1/2}) | Impact Strength (MJ/m²) |
|---|---|---|---|---|---|
| Embodiment 10 | Ceramic | Polyvinylidene fluoride | 5: 1 | 7.1 | 13.2 |
| Embodiment 11 | Ceramic | Polyvinylidene fluoride | 6: 1 | 7.5 | 13.5 |
| Embodiment 12 | Ceramic | Polyvinylidene fluoride | 7: 1 | 7.6 | 13.7 |
| Embodiment 13 | Ceramic | Polyvinylidene fluoride | 8: 1 | 6.9 | 13.1 |
| Comparative Example 5 | Ceramic | Null | 100: 0 | 4.8 | 12.7 |
| Comparative Example 6 | Ceramic | Polyvinylidene fluoride | 4: 1 | 6.5 | 12.75 |
| Comparative Example 7 | Ceramic | Polyvinylidene fluoride | 9: 1 | 5.9 | 12.9 |

As shown in Table 2, in the case where the material of the second insulating layer 400 is a composition of ceramic and polyvinylidene fluoride, compared to Comparative Example 5 which has an insulating layer made of pure ceramic, the second insulating layer 400 according to the present disclosure has better fracture toughness and impact strength. Compared to the second insulating layer 400 according to the present disclosure, Comparative Example 6 with the same ceramic and polyvinylidene fluoride components has a larger weight proportion of polyvinylidene fluoride. Although Comparative Example 6 has similar fracture toughness to the embodiments of the present disclosure, its impact strength shows a significant decline. Compared to the second insulating layer 400 according to the present disclosure, Comparative Example 7 with the same ceramic and polyvinylidene fluoride components has a larger weight proportion of ceramic. Although Comparative Example 7 has similar impact strength to the embodiments of the present disclosure, its fracture toughness shows a significant decline. In summary, the second insulating layer 400 using the material composition within the specified weight ratio range according to the present disclosure has better fracture toughness and impact strength. Improved fracture toughness prevents the second insulating layer 400 from insulation failure due to bending-induced damage, and improved impact strength enables the second insulating layer 400 to have better laser die-cutting compatibility.

As can be seen from the above two tables, in the case where the materials of the first insulating layer 300 and the second insulating layer 400 both include ceramic and polyvinylidene fluoride, the weight proportion of polyvinylidene fluoride in the first insulating layer 300 is greater than that in the second insulating layer 400, and the fracture toughness of the first insulating layer 300 is greater than that of the second insulating layer 400. The first insulating layer 300 has better flexibility, which can prevent the first insulating layer 300 from insulation failure due to bending-induced damage during the bending process, ensure the insulation effect of the first insulating layer 300, and thus improve the reliability of the secondary battery.

Correspondingly, some embodiments of the present disclosure further provide a preparation method for the secondary battery, which can be used to manufacture the secondary battery provided in the aforementioned embodiments. The following provides a detailed description of the preparation method for the secondary battery provided in another embodiment of the present disclosure in conjunction with the accompanying drawings. For parts that are identical or corresponding to those in the previous embodiments, reference may be made to the corresponding descriptions of the aforementioned embodiments, and further elaboration will not be provided here.

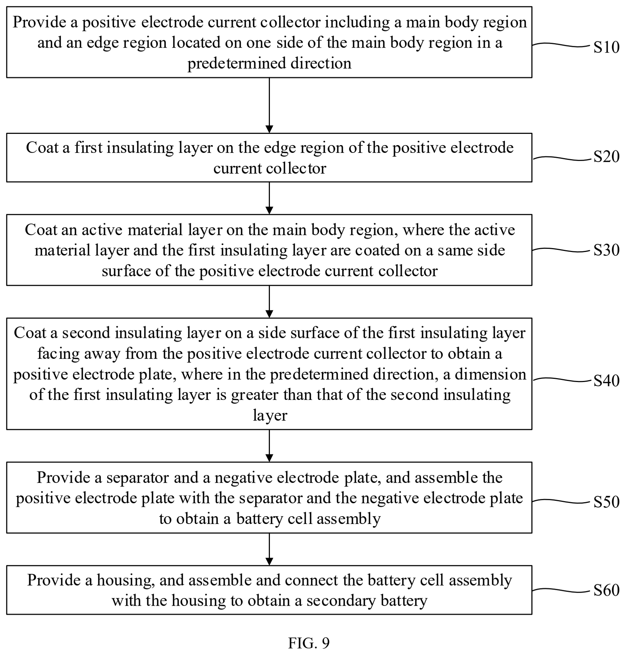

Referring to FIG. 9, the preparation method for the secondary battery includes the following operations S10 to S60.

In operation S10, a positive electrode current collector 100 is provided. The positive electrode current collector 100 has a main body region 102 and an edge region 101 located on one side of the main body region 102.

In operation S20, a first insulating layer 300 is formed over the edge region 101 of the positive electrode current collector 100.

In operation S30, an active material layer 200 is formed on the main body region 102. The active material layer 200 and the first insulating layer 300 are formed on a same side of the positive electrode current collector 100.

In operation S40, a second insulating layer 400 is formed on a surface of the first insulating layer 300 facing away from the edge region 101 to obtain a positive electrode plate. In the direction X, a dimension of the first insulating layer 300 is greater than a dimension of the second insulating layer 400.

In operation S50, a separator and a negative electrode plate are provided, and then the positive electrode plate is assembled with the separator and the negative electrode plate to obtain a battery cell assembly.

In operation S60, a housing is provided, and then the battery cell assembly is assembled and connected with the housing to obtain a secondary battery.

The following provides a detailed description of operations S10 to S60.

In operation S10, the positive electrode current collector 100 is provided. The positive electrode current collector 100 has intersecting and mutually perpendicular predetermined direction X, thickness direction Y, and length direction Z, where the direction X is defined as the width direction of the positive electrode current collector 100, and the positive electrode current collector 100 is of a sheet-like structure extending along the length direction Z. The positive electrode current collector 100 has a main body region 102 and an edge region 101 located on one side of the main body region 102.

In operation S20, the first insulating layer 300 is coated on one surface of the edge region 101 of the positive electrode current collector 100. The first insulating layer 300 is coated first to confine the subsequent coating of the active material layer 200, preventing the active material layer 200 from overflowing beyond the main body region 102. After the coating of the first insulating layer 300 is completed, the first insulating layer 300 is dried to cure. The method for coating the first insulating layer 300 includes a gravure coating process.

In operation S30, the active material layer 200 is coated on the main body region 102. The active material layer 200 and the first insulating layer 300 coated in the operation S20 are formed on a same side of the positive electrode current collector 100. After the coating of the active material layer 200 is completed, the active material layer 200 is dried to cure. The method for coating the active material layer 200 includes an extrusion coating process.

In some embodiments, before coating the active material layer 200 on the main body region 102, a carbon layer 500 is coated on the main body region 102. The method for coating the carbon layer 500 includes an extrusion coating process.

In operation S40, the second insulating layer 400 is coated on a surface of the first insulating layer 300 facing away from the edge region 101. In the direction X, the dimension of the first insulating layer 300 is greater than the dimension of the second insulating layer 400. After the coating of the second insulating layer 400 is completed, the second insulating layer 400 is dried to cure. The method for coating the second insulating layer 400 includes an extrusion coating process.

In this embodiment, the positive electrode plate has a structure with active material layers 200 on two opposite sides. After completing the coating and forming of the first insulating layer 300, active material layer 200, and second insulating layer 400 on one surface of the positive electrode current collector 100, operations S20 to S40 are repeated on the opposite surface of the positive electrode current collector 100 to obtain the positive electrode plate. In some embodiments, the active material layer 200 and the insulating layers are only provided on one surface of the positive electrode current collector 100, and operations S20 to S40 are performed only once. The present disclosure imposes no specific limitation on this.

In operation S50, a separator and a negative electrode plate are provided, and then the positive electrode plate is assembled with the separator and the negative electrode plate to obtain a battery cell assembly.

In operation S60, a housing is provided. The battery cell assembly is mounted into the housing, and electrolyte is injected into the housing to obtain a secondary battery.

Correspondingly, some embodiments of the present disclosure further provide an energy storage system including multiple secondary batteries. In addition to or as an alternative to one or more of the features disclosed above, the multiple secondary batteries include the secondary battery as described previously or the secondary battery obtained using the preparation method as described previously.

Correspondingly, some embodiments of the present disclosure further provide an electrical device including multiple secondary batteries. In addition to or as an alternative to one or more of the features disclosed above, the multiple secondary batteries include the secondary battery as described previously or the secondary battery obtained using the preparation method as described previously.

Those of ordinary skill in the art can understand that the aforementioned embodiments are specific examples for implementing the present disclosure. In practical applications, various modifications can be made to them in form and detail without deviating from the spirit and scope of the present disclosure. A person skilled in the art may make various alterations and modifications without departing from the spirit and scope of the present disclosure, and thus the scope of protection of the present disclosure should be determined by the scope of the appended claims.

## Claims

1. A secondary battery, comprising:
a housing with an accommodating cavity; and
a battery cell assembly housed in the accommodating cavity;
wherein the battery cell assembly comprises: a positive electrode plate, a separator, and a negative electrode plate,
wherein the positive electrode plate comprises:
a positive electrode current collector (100) comprising a main body region (102) and an edge region (101) located on one side of the main body region (102);
an active material layer (200), disposed on at least one surface of the main body region (102); and
an insulating layer structure;
wherein the insulating layer structure comprises:
a first insulating layer (300) completely covering the edge region (101), wherein the first insulating layer (300) and the active material layer (200) are disposed on a same side of the positive electrode current collector (100); and
a second insulating layer (400), disposed on a surface of the first insulating layer (300) facing away from the edge region (101);
wherein in a direction (X) from the main body region (102) to the edge region (101), a dimension of the first insulating layer (300) is greater than a dimension of the second insulating layer (400).

2. The secondary battery according to claim 1, wherein in the direction (X) from the main body region (102) to the edge region (101), the positive electrode current collector (100) has a first end (1001) and a second end (1002) opposite to the first end (1001), and the edge region (101) is disposed on one side of the main body region (102) close to the second end (1002);
in the direction (X) from the main body region (102) to the edge region (101), a distance between an edge of the first insulating layer (300) close to the second end (1002) and the second end (1002) is smaller than a distance between an edge of the second insulating layer (400) close to the second end (1002) and the second end (1002).

3. The secondary battery according to claim 1 or claim 2, wherein the first insulating layer (300) and the second insulating layer (400) abut against the active material layer (200).

4. The secondary battery according to claim 1 or claim 2, wherein in the direction (X) from the main body region (102) to the edge region (101), L1 represents a width of the first insulating layer (300), L2 represents a width of the second insulating layer (400), and L3 represents a width of the edge region (101), wherein L1, L2, and L3 satisfy 0.12 × L1 ≤ L2<L1, and 0.2 × L3 ≤ LI ≤ L3.

5. The secondary battery according to claim 4, wherein 8 mm ≤ L1 ≤ 40 mm, 3 mm ≤ L2 ≤ 8 mm, and 8 mm ≤ L3 ≤ 40 mm.

6. The secondary battery according to claim 1 or claim 2, wherein in a thickness direction (Y) of the positive electrode current collector (100), H1 represents a thickness of the first insulating layer (300), and H2 represents a thickness of the second insulating layer (400), wherein H1 and H2 satisfy H2>H1, and 0.01 × H2 ≤ H1 ≤ 0.13 × H2.

7. The secondary battery according to claim 6, wherein H3 represents a thickness of the active material layer (200), wherein H1, H2, and H3 satisfy 0.2 × H3 ≤ H2 ≤ 0.5 ×H3, 0.8 µm≤ H1 ≤2 µm, 15 µm ≤ H2 ≤ 60 µm, and 70 µm ≤ H3 ≤ 90 µm.

8. The secondary battery according to claim 2, further comprising a carbon layer (500) sandwiched between the positive electrode current collector (100) and the active material layer (200), wherein the carbon layer (500) and the active material layer (200) extend from the first end (1001) along the direction (X) from the main body region (102) to the edge region (101);
in the direction (X) from the main body region (102) to the edge region (101), a width of the active material layer (200) is equal to a width of the carbon layer (500); and
the carbon layer (500) abuts against the first insulating layer (300).

9. The secondary battery according to claim 1, wherein in the first insulating layer (300) comprises a covered portion (301) and an exposed portion (302); the covered portion (301) correspond to the second insulating layer (400); a window is provided on the exposed portion (302), and part of the positive electrode current collector (100) is exposed from the window.

10. The secondary battery according to claim 1, wherein a material of the first insulating layer (300) comprises at least one of ceramic, polyvinylidene fluoride, and polyimide;
a material of the second insulating layer (400) comprises ceramic and polyvinylidene fluoride.

11. The secondary battery according to claim 10, wherein in a case that the material of the first insulating layer (300) comprises ceramic and polyvinylidene fluoride, w1 represents a weight of ceramic in the first insulating layer (300), and w2 represents a weight of polyvinylidene fluoride in the first insulating layer (300), wherein w1 and w2 satisfy 1/9 ≤ w1/w2 ≤ 3/7;
in a case where the material of the first insulating layer (300) comprises ceramic and polyimide, the first weight w1 of ceramic in the first insulating layer (300), and w3 represents a weight of polyimide in the first insulating layer (300), wherein w1 and w3 satisfy 0 < w1/w3 ≤ 3/7;
in a case where the material of the first insulating layer (300) comprises polyimide only, a weight proportion of polyimide in the first insulating layer (300) is 100%;
in a case that the material of the second insulating layer (400) comprises ceramic and polyvinylidene fluoride, w4 represents a weight of ceramic in the second insulating layer (400), and w5 represents a weight of polyvinylidene fluoride in the second insulating layer (400), wherein w4 and w5 satisfy 4 ≤ w4/w5 ≤ 9.

12. The secondary battery according to claim 11, wherein in a case that the material of the first insulating layer (300) comprises ceramic and polyvinylidene fluoride, 1/8 ≤ w1/w2 ≤ 2/7.

13. A preparation method for a secondary battery, comprising:
providing a positive electrode current collector (100) comprising a main body region (102) and an edge region (101) located on one side of the main body region (102) in a predetermined direction (X), wherein the predetermined direction (X) is width direction of the positive electrode current collector (100);
coating a first insulating layer (300) on the edge region (101) of the positive electrode current collector (100);
coating an active material layer (200) on the main body region (102), wherein the active material layer (200) and the first insulating layer (300) are formed on a same side surface of the positive electrode current collector (100);
coating a second insulating layer (400) on a side surface of the first insulating layer (300) facing away from the positive electrode current collector (100) to obtain a positive electrode plate; wherein in the predetermined direction (X), a dimension of the first insulating layer (300) is greater than a dimension of the second insulating layer (400);
providing a separator and a negative electrode plate, assembling the positive electrode plate with the separator and the negative electrode plate to obtain a battery cell assembly; and
providing a housing, assembling and connecting the battery cell assembly with the housing to obtain a secondary battery.

14. An energy storage system, comprising at least one secondary battery, wherein the at least one secondary battery comprises the secondary battery according to any one of claims 1 to 12 or the secondary battery prepared using the preparation method according to claim 13.

15. An electrical device, comprising at least one secondary battery, wherein the at least one secondary battery comprises the secondary battery according to any one of claims 1 to 12 or the secondary battery prepared using the preparation method according to claim 13.
